# FASCICULE DE BREVET EUROPEEN

(11) **EP 0 433 119 B1**
(45) Date de publication et mention de la délivrance du brevet: **26.05.1993**
(21) Numéro de dépôt: 90403236.4
(22) Date de dépôt: 15.11.1990
(51) Int. Cl.: F16D 23/06

(54) **Synchroniseur de boîte de vitesses**
Synchroeinrichtung eines Getriebes
Synchroniser of a gearbox

(30) Priorité: 14.12.1989 FR 8916564
(43) Date de publication de la demande: 19.06.1991
(73) Titulaire: AUTOMOBILES PEUGEOT, 75116 Paris (FR); AUTOMOBILES CITROEN, 92200 Neuilly-sur-Seine (FR)
(72) Inventeur: Chrétien, Philippe, F-78430 Louveciennes (FR)
(74) Mandataire: Moncheny, Michel

(56) Documents cités:
- DE-A- 2 122 947
- FR-A- 1 444 451

## Description

L'invention concerne un synchroniseur pour un pignon monté libre en rotation sur un arbre.

L'invention concerne plus particulièrement un synchroniseur du type à bague de friction conique. Dans ces synchroniseurs tels que ceux décrits et représentés dans le document FR-A-2.571.803, la libération du synchroniseur, c'est-à-dire le coulissement du manchon de commande jusqu'à son crabotage avec le pignon lors de l'obtention du synchronisme des vitesses entre pignon et cône de friction-manchon, est une étape critique du bon fonctionnement du synchroniseur.

Dans les synchroniseurs dans lesquels il existe une rampe entre le manchon et le cône, tels que par exemple ceux décrits et représentés dans le document précédent ou dans le document FR-A-2.470.897, la traînée résiduelle du pignon nuit à sa libération car elle a pour effet de continuer à plaquer le cône de friction contre ses rampes. Ce phénomène bien connu est généralement accepté car il est masqué du fait des efforts à appliquer pour la synchronisation qui sont supérieurs à ceux des montées de rapports. On remarquera toutefois que ce phénomène de dureté dans l'utilisation du synchroniseur est réduit de moitié en utilisant un synchroniseur à deux bagues de friction à entraînement direct.

Mais le phénomène de traînée n'est pas sans incidence sur les montées de rapport. En effet, si l'on dégage brutalement les rampes de montée, le plot à rampes peut se déplacer librement entre les dents du manchon et aboutir à un franchissement très rapide qui a pour conséquence de venir plaquer le plot du cône double sur les rampes opposées (de rétrogradage) et arrêter une seconde fois son déplacement en coulissement axial dans la direction de crabotage.

Afin de remédier à cet inconvénient, l'invention propose un synchroniseur pour un pignon monté libre en rotation sur un arbre et auquel est liée en rotation une douille tronconique coaxiale dont les surfaces tronconiques externe et interne sont respectivement reçues entre une bague de friction extérieure et une bague de friction intérieure concentriques et liées en rotation à un moyeu de crabotage fixé à l'arbre et sur lequel est monté coulissant axialement un manchon de commande susceptible de coopérer avec la bague de friction extérieure pour la déplacer axialement par rapport à la bague de friction intérieure de manière à pincer la douille pour entraîner cette dernière en rotation, caractérisé en ce que la bague de friction extérieure comporte au moins un plot qui est susceptible de coulisser dans une rainure axiale du moyeu délimitée transversalement par deux flancs entre lesquels le plot est reçu avec un jeu transversal déterminé et entre lesquels coulissent, sans jeu transversal, deux dents du moyeu entre lesquelles le plot est susceptible de s'engager, et en ce que la bague de friction intérieure est liée au moyeu par des moyens d'accouplement en rotation qui permettent un jeu angulaire relatif correspondant à un déplacement transversal du plot entre lesdits flancs qui est sensiblement égal à la moitié dudit jeu transversal déterminé et qui est inférieur à ce dit jeu diminué de l'épaisseur transversale d'une des deux dents.

Selon d'autres caractéristiques de l'invention :
- le plot comporte deux rampes transversales opposées susceptibles de coopérer avec une extrémité inclinée de l'une des deux dents lors de son engagement entre celles-ci ;
- les moyens d'accouplement en rotation comportent au moins une patte qui s'étend axialement depuis la bague de friction intérieure ou le moyeu et dont l'extrémité en saillie est reçue avec jeu transversal entre les flancs d'une encoche correspondante formée en vis-à-vis dans le moyeu ou dans la bague de friction intérieure respectivement.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe axiale d'un synchroniseur double ;
- la figure 2 est une vue schématique en section partielle développée selon la ligne 2-2 de la figure 1 de l'agencement selon l'invention, le synchroniseur étant représenté dans sa position correspondant au début de la phase d'armement ;
- la figure 3 est une vue similaire à celle de la figure 2 correspondant à la phase de synchronisme ; et
- la figure 4 est une vue simplifiée similaire à celle de la figure 2 correspondant à la position de crabotage.

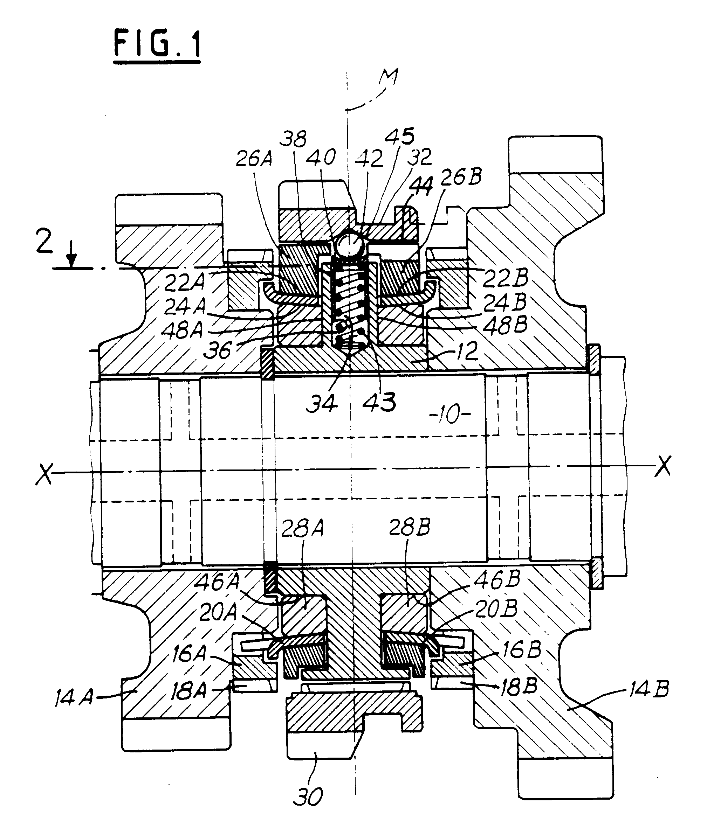

Le synchroniseur double représenté à la figure 1 est du type de celui décrit et représenté dans FR-A-2 644 862 au contenu de laquelle on pourra se référer pour en connaître les détails de structure et de fonctionnement.

La conception du synchroniseur double représenté à la figure 1 est globalement symétrique par rapport à son plan médian M et l'ensemble des composants relatifs à un premier synchroniseur, à gauche en considérant la figure 1, y sont repérés par des chiffres de référence indicés A tandis que les composants de l'autre synchroniseur y sont repérés avec les mêmes chiffres de référence indicés B.

On a représenté à la figure 1 un arbre 10 sur lequel est fixé axialement et immobilisé en rotation un moyeu 12. De part et d'autre du moyeu 12 par rapport à son plan médian M sont disposés deux pignons 14A et 14B qui sont immobilisés axialement mais libres en rotation sur l'arbre 10.

Les pignons 14A et 14B sont munis d'un prolongement axial 16A, 16B sur la périphérie desquels sont formées des dentures de crabotage 18A et 18B.

Chacun des prolongements axiaux 16A et 16B est lié en rotation à une douille tronconique coaxiale 20A, 20B dont le cône s'ouvre en direction du pignon.

Les surfaces de friction tronconiques externes 22A, 22B et internes 24A, 24B des douilles 20A et 20B sont respectivement reçues entre des bagues de friction extérieure 26A, 26B et des bagues de friction intérieure 28A et 28B. Les bagues de friction extérieure 26A et intérieure 28A sont concentriques et liées en rotation au moyeu de crabotage 12 de même que les bagues 26B et 28B.

Le synchroniseur double comporte également un manchon de commande 30 qui est susceptible d'être déplacé axialement par rapport au moyeu 12 sous l'action d'une fourchette de commande (non représentée) qui est reçue dans une rainure de fourchette 32 formée dans la surface cylindrique externe du manchon de commande 22.

Les différentes positions axiales du manchon 30 par rapport au moyeu 12 résultent de la coopération de moyens de verrouillage constitués par des poussoirs à billes 34 avec le manchon 30.

Chaque poussoir radial 34 est constitué d'un alésage 36 qui s'étend radialement dans une partie centrale du moyeu et dans lequel est reçu un piston de poussoir 40 qui sollicite vers l'extérieur une bille de verrouillage 42 au moyen d'un ressort 43.

La bille 42 repose sur un siège conique creux formé à l'extrémité libre du piston 40.

Chacune des billes 42 est reçue dans une piste axiale interne 44 formée dans la surface cylindrique interne du manchon de commande 30. La piste 44 peut comporter différents crans dont notamment le cran de centrage 45 à deux pentes opposées représenté à la figure 1 dans lequel est reçue la bille 42 lorsque le synchroniseur est dans sa position inactive.

Dans le cas où un tel synchroniseur est utilisé dans une boîte de vitesses pour une montée de rapports, au moment où il doit accoupler un pignon, par exemple le pignon 14A à l'arbre 10 qui est relié aux roues du véhicule, on constate que le pignon 14A :
- tourne initialement plus vite que l'arbre 10, car lorsque un rapport plus court était engagé préalablement, le moteur du véhicule entraînait l'arbre 10 moins vite que le pignon 14A, par l'intermédiaire de l'embrayage de la transmission ; puis
- ralentit du fait de la traînée résultant des efforts résistants appliqués au pignon 14A relié à l'embrayage du véhicule, essentiellement du fait du barbotage dans l'huile de lubrification.

Si la traînée est importante, notamment lorsque l'huile est visqueuse à froid, ou si la manoeuvre de commande de changement de vitesses est lente, le ralentissement du pignon 14A est tel qu'il devient moins rapide que l'arbre 10. Il résulte de ce phénomène une inversion des vitesses relatives entre l'arbre 10 et le pignon 14A, phénomène nuisible qui ne se produit pas lors d'un rétrogradage au cours duquel le pignon 14A tourne dès le début de la manoeuvre moins rapidement que l'arbre 10.

Afin de résoudre les problèmes mentionnés précédemment inhérents à la traînée, le synchroniseur de la figure 1 peut être modifié conformément aux enseignements de l'invention selon la représentation des figures 2 à 4.

Aux figures 2 à 4, et notamment à la figure 2, on reconnaît le pignon 14A qui est équipé de dents de crabotage 50 qui s'étendent axialement en direction de dents de crabotage 52 du manchon 30 qui sont reçues en coulissement dans des encoches correspondantes 54 du moyeu 12.

La douille tronconique 20A comporte une patte 56 qui fait saillie axialement depuis son bord libre 58 tourné vers le pignon 14A et dont l'extrémité libre est reçue dans une encoche 60 du pignon 14A.

Conformément à l'invention, la bague de friction extérieure 26A comporte un plot de commande 62.

Le plot de commande 62 s'étend depuis le bord libre axial 64 de la bague extérieure axialement vers l'intérieur du synchroniseur. Il comporte une première portion de grande largeur 66 qui se prolonge vers l'intérieur par deux rampes inclinées et opposées 68 puis par une portion de largeur réduite 70 délimitée par un bord axial interne 72.

La portion de plus grande largeur transversale 66 du plot de commande 6 est reçue avec un jeu transversal JT entre les deux flancs parallèles et opposés 74 et 76 d'une encoche axiale 80 du moyeu 12.

L'encoche 80 reçoit également, sans jeu transversal, deux dents 82 et 84 du manchon de commande 30. Chacune des dents 82 et 84 se termine axialement par une portion inclinée parallèle aux rampes 68 du plot 62.

Il n'y a pas de jeu transversal entre les dents 82, 84 et les flancs 74 et 76 de la rainure 80, c'est-à-dire que les deux dents sont uniquement susceptibles de coulisser par rapport au moyeu 12 le long des flancs 74 et 76.

Conformément à l'invention, la bague intérieure de friction 28A comporte une patte de commande 86 qui s'étend en saillie axiale depuis un bord 87 de la bague intérieure de friction 28A en direction d'une encoche correspondante 88 formée en vis-à-vis dans le moyeu 12.

La largeur transversale de la patte de commande 86 et celle de l'encoche 88 sont déterminées de manière à ce que l'accouplement en rotation entre la bague intérieure 28A et le moyeu 12 assuré par la bague 86 permette un jeu angulaire relatif entre les deux éléments correspondant à un déplacement transversal (dans le plan de la figure) du plot 62 entre les flancs 74 et 76 de l'encoche 80.

Conformément à l'invention, ce déplacement transversal est sensiblement égal à la moitié du jeu transversal JT et est inférieur à ce jeu JT diminué de l'épaisseur transversale E d'une des deux dents 82 ou 84, ces deux dents étant symétriques et de largeurs transversales égales.

Le synchroniseur fonctionne de la manière suivante.

Dans le cas de la montée d'un rapport de boîte de vitesses, et avant toute action sur le manchon de commande 30, l'arbre 10, le moyeu 12, le manchon 30, la douille 20A et les bagues de friction 26A et 28A se déplacent ensemble à une vitesse absolue VA qui est inférieure à la vitesse VP du pignon 14A. Il en résulte donc un mouvement relatif du pignon 14A par rapport à cet ensemble et les pattes 56 et 86 sont respectivement en contact dans leurs encoches respectives 60 et 88 par les points de contact C1 et C2 indiqués à la figure 2.

Lorsque l'utilisateur provoque le début de la synchronisation, c'est-à-dire la phase d'armement, le manchon 30 et ses dents sont sollicités axialement en direction du pignon 14A et donc de la bague de friction extérieure 26A comportant un ou plusieurs plots 62. Ce déplacement a pour effet d'augmenter la friction entre la douille 20A et les bagues de friction 26A et 28A, donc à ralentir le pignon 14A.

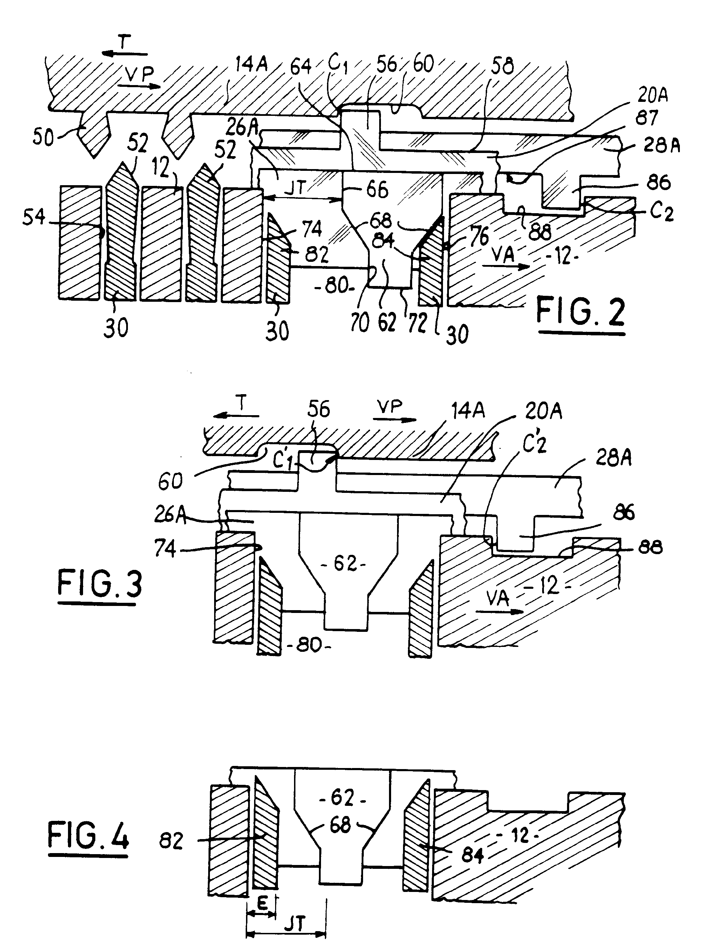

Une traînée T, de sens inverse à la vitesse VP tend aussi à ralentir le pignon 14A jusqu'au synchronisme représenté à la figure 3 pour lequel VP égal VA. Le plot 62 est alors sensiblement centré dans l'encoche 80 et la traînée continue de provoquer un ralentissement relatif du pignon 14A. Il s'en suit que la vitesse VP va devenir inférieure à la vitesse VA et le mouvement relatif du pignon 14A par rapport à l'ensemble va s'inverser ce qui a pour effet d'amener les pattes 56 et 86 en contact avec les flancs des encoches correspondantes 60 et 88 aux points C'1 et C'2.

Toutefois, du fait des dimensionnements transversaux des différents éléments conformément à l'invention, le plot de commande 62 ne peut pas se déplacer davantage, vers la gauche en considérant la figure 3, par rapport au moyeu 12, tant que les bagues 26A, 28A sont solidaires par friction de la douille 20A pendant le passage du rapport, et ne risque donc pas de venir en contact avec le flanc opposé (de rétrogradage) 74 de la rainure 80.

La poursuite du changement de rapport se produit donc par le franchissement sans effort supplémentaire de la position axiale du manchon 30 par rapport au moyeu 12 pour atteindre la position de crabotage représentée partiellement à la figure 4 dans laquelle les dents 52 vont venir s'intercaler entre les dents 50 du pignon 14A, les extrémités inclinées avant des dents 82 et 84 ne rencontrant pas les rampes 68.

Les efforts d'engagement d'un rapport, en cas de montée de rapport, sont donc particulièrement réduits. De plus la qualité du changement de rapport est très bonne, même lorsque le conducteur impose au manchon 30 une faible vitesse de translation axiale par rapport au moyeu 12.

## Revendications

1. Synchroniseur pour un pignon (14A) monté libre en rotation sur un arbre (10) et auquel est liée en rotation une douille (20A) tronconique coaxiale dont les faces tronconiques externe (22A) et interne (24A) sont respectivement reçues entre une bague de friction extérieure (26A) et une bague de friction intérieure (28A) concentriques et liées en rotation à un moyeu de crabotage (12) fixé à l'arbre (10) et sur lequel est monté coulissant un manchon de commande (30) susceptible de coopérer avec la bague de friction extérieure (28A) pour la déplacer axialement par rapport à la bague de friction intérieure (26A) de manière à pincer la douille (20A) pour entraîner cette dernière en rotation, caractérisé en ce que la bague de friction extérieure (26A) comporte au moins un plot (62) qui est susceptible de coulisser dans une rainure axiale (80) du moyeu (12) délimitée transversalement par deux flancs (74, 76) entre lesquels le plot (62) est reçu avec un jeu transversal (JT) et entre lesquels coulissent, sans jeu transversal, deux dents (82, 84) du manchon (30) entre lesquelles (82, 84) le plot (62) est susceptible de s'engager, et en ce que la bague de friction intérieure (28A) est liée au moyeu (12) par des moyens (86, 88) d'accouplement en rotation permettant un jeu angulaire relatif correspondant à un déplacement transversal du plot (62) entre lesdits flancs (74, 76) qui est sensiblement égal à la moitié dudit jeu transversal (JT) et qui est inférieur à ce dit jeu (JT) diminué de l'épaisseur transversale (E) d'une des deux dents (82, 84).

2. Synchroniseur selon la revendication 1, caractérisé en ce que le plot (62) comporte deux rampes transversales opposées (68) susceptible de coopérer avec une extrémité inclinée de l'une desdites deux dents (82, 84) lors de son engagement entre celles-ci.

3. Synchroniseur selon l'une des revendications 1 ou 2, caractérisé en ce que les moyens d'accouplement en rotation comportent au moins une patte (86) qui s'étend axialement depuis la bague de friction intérieure (28A) ou le moyeu (12) et dont l'extrémité en saillie est reçue avec un jeu transversal entre les flancs d'une encoche correspondante (88) formée en vis-à-vis dans le moyeu (12) ou dans la bague de friction intérieure (28A) respectivement.

## Patentansprüche

1. Synchronisiervorrichtung für ein Ritzel (14A), das frei drehbar auf einer Welle (10) angebracht ist und mit dem eine koaxiale kegelstumpfförmige Hülse (20A) drehfest verbunden ist, deren äußere (22A) und innere Kegelstumpfflächen (24A) jeweils zwischen einem äußeren Reibungsring (26A) und einem inneren Reibungsring (28A) aufgenommen sind, die konzentrisch und drehfest mit einer Klauenkupplungsnabe (12) verbunden sind, die an der Welle (10) befestigt ist und an der eine Schaltmuffe (30) gleitend verschiebbar befestigt ist, die in der Lage ist, mit dem äußeren Reibungsring (28A) zusammenzuwirken, um diesen in Bezug zum inneren Reibungsring (26A) derart axial zu verschieben, daß die Hülse (20A) derart gequetscht wird, daß diese drehend mitgenommen wird, dadurch gekennzeichnet, daß der äußere Reibungsring (26A) wenigstens einen Ansatz (62) aufweist, der in einer axialen Nut (80) der Nabe (12) gleitend verschiebbar ist, die in Querrichtung durch zwei Flanken (74, 76) begrenzt ist, zwischen welchen der Ansatz (62) mit einem transversalen Spiel (JT) aufgenommen ist, und zwischen welchen zwei Zähne (82, 84) der Buchse (30) ohne transversales Spiel gleiten, zwischen die der Ansatz (62) eingreifen kann, und daß der innere Reibungsring (28A) mit der Nabe (12) durch Drehverbindungseinrichtungen (86, 88) verbinden ist, die ein relatives Winkelspiel zulassen, das einer transversalen Verschiebung des Ansatzes (62) zwischen den Flanken (74, 76) entspricht, welche im wesentlichen gleich der Hälfte des transversalen Spiels (JT) und geringer als dieses Spiel (JT) abzüglich der transversalen Dicke (E) eines der beiden Zähne (82, 84) ist.

2. Synchronisiervorrichtung nach Anspruch 1, dadurch gekennzeichnet, daß der Ansatz (62) entgegengesetzte transversale Rampen (68) aufweist, die in der Lage sind, mit einem schrägen Ende eines der beiden Zähne (82, 84) zusammenzuwirken, wenn der Ansatz zwischen diesen eingreift.

3. Synchronisiervorrichtung nach einem der Ansprüche 1 oder 2, dadurch gekennzeichnet, daß die Drehverbindungseinrichtungen wenigstens eine Zunge (86) aufweisen, die sich von dem inneren Reibungsring (28A) oder der Nabe (12) aus in Axialrichtung erstreckt, und deren vorstehendes Ende mit transversalem Spiel zwischen den Flanken einer entsprechenden Ausnehmung (88) aufgenommen ist, die gegenüberliegend in der Nabe (12) beziehungsweise in dem inneren Reibungsring (28A) ausgebildet ist.

## Claims

1. Synchromesh device for a pinion (14A) mounted free in rotation on a shaft (10) and to which is linked in rotation a coaxial casing (20A) in the shape of a truncated cone, the outer (22A) and inner (24A) frusto-conical faces of which are respectively received between an outer friction ring (26A) and an inner friction ring (28A), concentric and linked in rotation to a coupling hub (12) attached to the shaft (10) and on which is mounted so as to slide a selector sleeve (30) capable of interacting with the outer friction ring (28A) in order to move it axially with respect to the inner friction ring (26A) so as to grip the casing (20A) in order to drive the latter in rotation, characterised in that the outer friction ring (26A) comprises at least one stud (62) which is capable of sliding in an axial groove (80) of the hub (12) delimited transversely by two walls (74, 76) between which the stud (62) is received with a transverse clearance (JT) and between which there slide, without transverse clearance, two teeth (82, 84) of the sleeve (30) between which (82, 84) the stud (62) is capable of engaging, and in that the inner friction ring (28A) is connected to the hub (12) by means (86, 88) for coupling in rotation permitting a relative angular clearance corresponding to a transverse movement of the stud (62) between the said walls (74, 76) which is substantially equal to half of the said transverse clearance (JT) and which is less than this said clearance (JT) less the transverse thickness (E) of one of the two teeth (82, 84).

2. Synchromesh device according to Claim 1, characterised in that the stud (62) comprises two opposed transverse ramps (68) capable of interacting with a slanting end of one of the two said teeth (82, 84) during its engagement between the latter.

3. Synchromesh device according to either of Claims 1 and 2, characterised in that the means for coupling in rotation comprise at least one lug (86) which extends axially from the inner friction ring (28A) or the hub (12) and the projecting end of which is received with a transverse clearance between the walls of a corresponding slot (88) formed face-to-face in the hub (12) or in the inner friction ring (28A) respectively.
